(19) Europäisches Patentamt

European Patent Office

Office européen des brevets

(11) Veröffentlichungsnummer : **0 617 765 B1**

(12) **EUROPÄISCHE PATENTSCHRIFT**

(45) Veröffentlichungstag der Patentschrift :
09.08.95 Patentblatt 95/32

(21) Anmeldenummer : 93911639.8

(22) Anmeldetag : 26.11.92

(86) Internationale Anmeldenummer :
PCT/EP92/02725

(87) Internationale Veröffentlichungsnummer :
WO 93/12351 24.06.93 Gazette 93/15

(51) Int. Cl.⁶ : **F16C 29/06**

�félicit ⑭ **ABSTREIFEREINHEIT FÜR EIN LAGERELEMENT.**

(30) Priorität : **12.12.91 DE 4141038**

(43) Veröffentlichungstag der Anmeldung :
**05.10.94 Patentblatt 94/40**

(45) Bekanntmachung des Hinweises auf die
Patenterteilung :
**09.08.95 Patentblatt 95/32**

(84) Benannte Vertragsstaaten :
**CH DE FR IT LI**

(56) Entgegenhaltungen :
**EP-A- 0 211 243**
**EP-A- 0 512 253**
**DE-C- 2 130 420**
**FR-A- 2 522 092**

(73) Patentinhaber : **INA Wälzlager Schaeffler KG**
**D-91072 Herzogenaurach (DE)**

(72) Erfinder : **WINKELMANN, Ludwig**
**Hutstrasse 1a**
**D-8520 Erlangen (DE)**
Erfinder : **KOSCHMIEDER, Hartmut**
**Reinschartenweg 6**
**D-8520 Erlangen (DE)**
Erfinder : **KÖTZSCH, Steffen**
**Würzburger Strasse 20**
**D-8506 Langenzenn (DE)**

**EP 0 617 765 B1**

## Beschreibung

Die Erfindung betrifft eine Abstreifereinheit für die beiden Stirnseiten eines an der Lauffläche einer Führungsschiene gelagerten Lagerelements, vorzugsweise Linearwälzlagerelements, die eine Trägerplatte und einen Abstreifer aufweist, der von der Trägerplatte gehalten ist, wobei der Abstreifer mit Schmierstoffkanälen für die Versorgung der Lagereinheit mit Schmierstoff versehen ist und zum Zurückhalten von Schmierstoff in dem Lagerelement mit einem Endbereich auf der Lauffläche auflegbar ist.

Aus der DE-C-21 30 420 ist eine Abstreifereinheit für ein Lagerelement bekannt, welches eine ständig dosierte Schmierung eines Wälzlagers mit einfachen und billigen Mitteln ermöglicht. Diese Vorrichtung enthält einen Abstreifer aus einem polymeren Werkstoff mit einer Abstreifkante, die bei der hin- und hergehenden Bewegung eines als Rollenumlaufschuh ausgebildeten Lagerelementes die Laufbahn reinigen soll, um Verunreinigungen von dem Wälzlager fern zu halten und gleichzeitig den Austritt von Schmierstoff aus dem Lagerelement verhindert. Hier wird Schmierstoff von der Lageraußenseite über ein Element aus saugfähigem Material, das die auf der Lauffläche aufliegende Abstreifkante umgibt, in das Innere des Lagerelements gefördert. Dabei ist es möglich, daß mit dem Schmierstoff auch auf der Laufbahn aufliegende unerwünschte Emulsionen in das Lager transportiert werden.

Der Erfindung liegt die Aufgabe zugrunde, die Abstreifereinheit so weiterzubilden, daß frischer Schmierstoff ohne Leckverluste dem Lagerelement unmittelbar zugeführt und dabei gleichmäßig verteilt wird und daß bei der hin- und hergehenden Bewegung des Lagerelementes der Schmierstoff möglichst vollständig in dem Lagerelement verbleibt, so daß sich die erforderlichen Schmierstoffmengen für die Nachschmierung drastisch verringern lassen. Auf diese Weise soll es den Betreibern von Anlagen mit solchen Abstreifereinheiten ermöglicht werden, durch den Umweltschutz bedingte gesetzliche Auflagen besser zu erfüllen. Außerdem sollen Leckverluste des Schmierstoffs, die zwischen dem Abstreifer und der Trägerplatte aufgrund von Unebenheiten an der Abstreiferauflagefläche entstehen, verhindert werden.

Nach einem ersten Vorschlag wird diese Aufgabe erfindungsgemäß dadurch gelöst, daß die Schmierstoffkanäle als von einer Stirnseite des Abstreifers ausgehende Nuten ausgebildet sind, wobei zwischen der Trägerplatte und dem Abstreifer eine elastische Dichtungsschicht mit einer die Schmierstoffkanäle abdichtenden reißfesten Folie angeordnet ist. Die elastische Dichtungsschicht gleicht dann die Unebenheiten der Abstreiferfrontseite aus und die Folie verhindert ein zu starkes Eindringen der Dichtungsschicht in die Schmierstoffkanäle. Die Dichtungsschicht kann z. B. aus einem Schaumstoff bestehen, der mit der reißfesten Folie durch Kleben verbunden ist.

In dem Abstreifer können Verbindungskanäle und Durchtrittsöffnungen angeordnet sein, über welche die an der äußeren Stirnseite des Abstreifers angeordneten Schmierstoffkanäle mit dessen innerer, dem Lagerelement zugewandter Stirnseite verbunden sind. Dabei kann jeweils in die Durchtrittsöffnung bzw. in den Schmierstoffkanal des Abstreifers ein durchlässiger, sich über den gesamten freien Querschnitt (lichte Weite) erstreckender Schaumstoffkörper eingesetzt sein. Bei einem solchen aus einem offenzelligen Schaumstoff bestehenden Körper, der unter leichter Vorspannung eingesetzt wird, verhindern die mit Schmierstoff gefüllten Schaumstoffzellen aufgrund des Kapillareffektes das Hindurchdringen von kleinen Luftbläschen und somit ein Absinken des flüssigen Schmierstoffs. Ein Zurückfließen von Schmierstoff aus im Niveau höher liegenden Teilen des Schmierstoffkanals wird auf diese Weise verhindert. Dadurch brauchen die Kanalteile bei jedem neuen Schmierimpuls nicht neu aufgefüllt zu werden. Wenn der Schaumstoff aus den Durchtrittsöffnungen bzw. den Schmierstoffkanälen entfernt wird, kann der Abstreifer auch für die Fettschmierung verwendet werden. Er ist also nicht nur für die Ölschmierung geeignet.

Die Durchtrittsöffnung kann mittels eines eingesteckten, einen aufweitbaren Öffnungsschlitz aufweisenden gummielastischen Ventils verschlossen werden. Es ist auch möglich, daß die Durchtrittsöffnung mittels eines eingesteckten Rückschlagventils in einer der beiden Strömungsrichtungen verschlossen wird. Solche eingesetzten Ventilelemente ermöglichen es, den Abstreifer sowohl für die Öl- als auch für die Fettschmierung zu verwenden. Die Ventilelemente gewährleisten ebenfalls, daß ein Luftzutritt zu den Schmierstoffkanälen vermieden wird. Sie können entweder als separate Elemente in die Durchtrittsöffnung eingesetzt werden oder der Abstreifer selbst kann so gestaltet sein, daß die Ventilkugel eines Rückschlagventils unmittelbar von Federelementen gegen eine am Abstreifer als Ventilsitz ausgebildete Abdichtkante angedrückt wird. Die Federelemente zum Andrücken der Ventilkugel können entweder unmittelbar am Abstreifer oder aber am in die Durchtrittsöffnung einzusetzenden Ventilkörper angeformt sein oder als separate Federelemente eingesetzt sein. Bei einem gummielastischen Ventil mit einem Öffnungsschlitz drückt der unter Druck zugeführte Schmierstoff den Schlitz auseinander, so daß der Schmierstoff hindurchtreten kann. Nach dem Absinken des Schmierstoffdruckes bewirkt die Elastizität des gummielastischen Ventilkörpers ein Zurückfedern und damit ein Schließen des Öffnungsschlitzes und ein Verschließen des Schmierstoffkanals.

Eine weitere Möglichkeit zur Reduzierung der Schmierstoffmenge ergibt sich dadurch, daß an dem Lager-

2

element ein Dochtstreifen angeordnet ist, der an der inneren, dem Lagerelement zugewandten Stirnseite des Abstreifers anliegt und sich mit einem Endbereich bis zu der Lauffläche der Führungsschiene erstreckt. Ein solcher Dochtstreifen kann beispielsweise aus einem offenzelligen Schaumstoff, Filz, Vlies oder Gewebe bestehen, so daß der Schmierstoff von ihm aufgrund des Kapillareffektes unmittelbar an die Lauffläche abgegeben wird. Der Dochtstreifen kann von einer Stützplatte gehalten und in eine Ausnehmung der Stützplatte eingesetzt sein. Zur Befestigung des Dochtstreifens können außerdem an der Stützplatte abstehende Haltenocken ausgebildet sein, die in entsprechende Öffnungen des Dochtstreifens passend eingreifen. Der Dochtstreifen kann durch Eigenelastizität oder durch zusätzliche Federelemente gegen die Lauffläche der Führungsschiene angefedert sein.

Die in der Nähe der Durchtrittsöffnung oder des Schmierstoffkanals befindlichen stirnseitigen Bereiche des Abstreifers können auf der Seite der Stützplatte oder der Trägerplatte erhaben ausgeführt sein, so daß sie sich in den Dochtstreifen oder den Schaumstoffkörper hineindrücken, wodurch ebenfalls eine Ventilwirkung erreicht wird. Diese Ausbildung hat den Vorteil, daß über den Dochtstreifen nur eine minimale Schmierstoffmenge, wie sie beispielsweise bei Wälzlagern erforderlich ist, dem Kontaktbereich mit den Wälzkörpern unmittelbar zugeführt werden kann, ohne daß dabei Schmierstoffverluste auftreten. Auch überschüssige Schmierstoffmengen können von den Dochtstreifen beim Rückhub aufgenommen und beim Vorwärtshub wieder abgegeben werden.

Durch eine angeformte Nase an der Abstreiferlippe, die den auf der Lauffläche der Führungsschiene aufliegenden Endbereich des Abstreifers bildet, läßt sich die Schmierstoffsammelwirkung des Dochtstreifens noch vergrößern.

Nach einem weiteren Vorschlag wird die erfindungsgemäße Aufgabe dadurch gelöst, daß die Schmierstoffkanäle als von einer Stirnseite des Abstreifers ausgehende Nuten ausgebildet sind, die mittels einer Verschlußkappe verschlossen sind. Die Schmierstoffkanäle haben dadurch keinen Kontakt mehr zur Außenseite des Lagerelements. Eine solche Verschlußkappe kann entweder ein- oder mehrstückig ausgeführt sein. Es ist möglich, die Verschlußkappe im Querschnitt U-förmig auszuführen, so daß sie mit ihren U-Schenkeln voraus in die Schmierstoffkanäle unter leichter Vorspannung eingedrückt werden kann, wodurch die Kanäle vollständig abgedichtet werden. Diese Ausführung hat auch den Vorteil, daß kein zusätzlicher axialer Bauraum für die Verschlußkappe erforderlich ist. Zur Erhöhung der Dichtigkeit bei höherem Schmierstoffdruck wird zusätzlich eine elastische Dichtungsschicht aus einem geschlossenzelligen Schaumstoff zwischen der Trägerplatte und dem Abstreifer eingesetzt.

Ausführungsbeispiele der Erfindung sind in den Zeichnungen dargestellt und werden im folgenden näher beschrieben. Es zeigen:

Fig. 1      ein an einer Führungsschiene angeordnetes Lagerelement mit einer stirnseitigen Abstreifereinheit;

Fig. 2      eine Draufsicht auf die Lagereinheit gemäß Figur 1;

Fig. 3      eine stirnseitige Ansicht eines Abstreifers;

Fig. 4      einen senkrechten Schnitt durch eine Abstreifereinheit gemäß Linie IV-IV der Figur 3;

Fig. 5      einen vergrößerten Ausschnitt durch den Bereich der Durchtrittsöffnung einer Abstreifereinheit;

Fig. 6      einen gegenüber Figur 5 veränderten Ausschnitt aus der Abstreifereinheit;

Fig. 7      einen solchen Ausschnitt mit einem gummielastischen Ventil;

Fig. 8      einen solchen Ausschnitt mit einem ersten Rückschlagventil;

Fig. 9      einen solchen Ausschnitt mit einem zweiten Rückschlagventil;

Fig. 10      einen solchen Ausschnitt mit einem Dochtstreifen;

Fig. 11      eine stirnseitige Ansicht eines Abstreifers mit Dochtstreifen;

Fig. 12      eine Draufsicht auf die Abstreifereinheit gemäß Figur 11;

Fig. 13      einen Teilschnitt durch die mit einem gefalteten Docht versehene Abstreifereinheit;

Fig. 14      die Ansicht einer Verschlußkappe.

Eine erfindungsgemäße Abstreifereinheit ist an einem als Wagen ausgebildeten Lagerelement 1 montiert, der eine Führungsschiene 2 im Bereich von deren Lauffläche 3 umgibt. Die Abstreifereinheit weist an jeder Stirnseite des Lagerelementes 1 eine Trägerplatte 4 auf, die jeweils an einem Abstreifer 5 stirnseitig angeordnet ist. Dieser ist ein Bauteil aus einem polymeren Werkstoff und weist Schmierstoffkanäle 6 auf, die als zur Seite der Trägerplatte 4 hin offene Nuten ausgeführt sind.

Die Nuten lassen sich mit Hilfe einer Verschlußkappe 7 mit U-förmigem Querschnitt, die aus zwei Kappenteilen 8 und 9 besteht, verschließen. Anschließend wird an den Abstreifer 5 stirnseitig eine Dichtungsschicht 10 gelegt, wonach die Trägerplatte 4 angesetzt wird.

Statt der Verschlußkappe 7 kann zum Abdichten des Schmierstoffkanals 6 die Dichtungsschicht 10 allein benutzt werden, wobei dann zwischen der Dichtungsschicht 10 und dem Abstreifer 5 noch eine reißfeste Folie 11 angeordnet wird, die mit der Dichtungsschicht 10 verklebt sein kann und ein zu tiefes Eindringen der Dichtungsschicht 10 in den Schmierstoffkanal 6 verhindert.

An einer Stelle ist der Schmierstoffkanal 6 über einen in dem Abstreifer 5 angeordneten Verbindungskanal 12 und eine sich daran anschließende Durchtrittsöffnung 13 zu der anderen, von der Dichtungsschicht 10 abgewandten Stirnseite geöffnet. Schmierstoff kann also von dem Schmierstoffkanal 6 durch den Abstreifer hindurch in das Innere des Lagerelements geleitet werden.

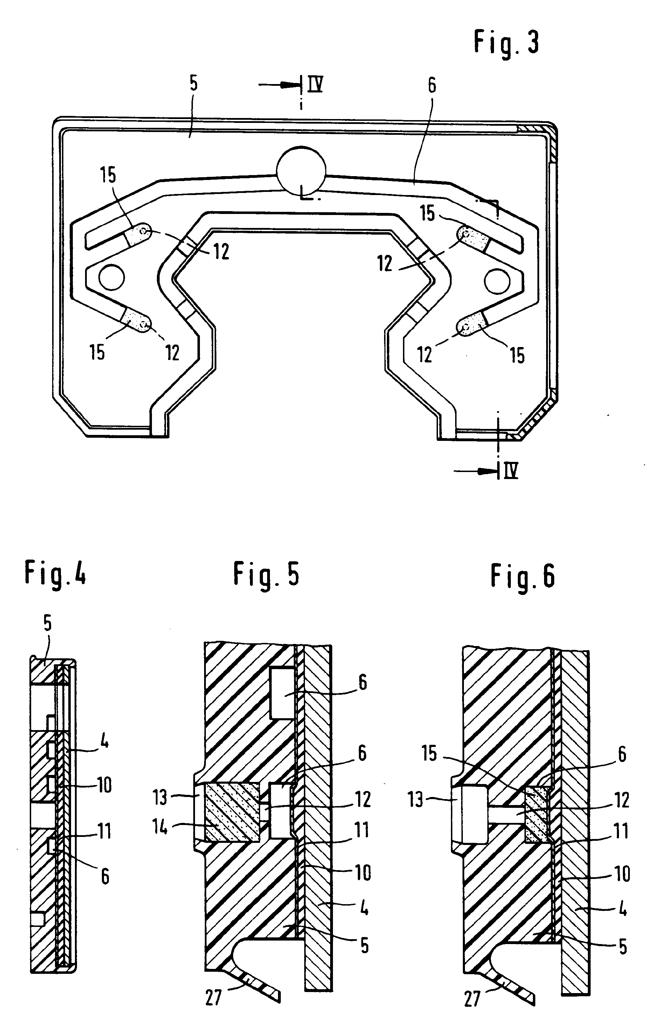

Gemäß Figur 5 ist in die Durchtrittsöffnung 13 ein Schaumstoffkörper 14 mit leichter Vorspannung eingesetzt, so daß infolge der Kapillarwirkung dieses offenporigen Schaumstoffs keine Luft, sondern nur bestimmte Schmierstoffmengen durch die Durchtrittsöffnung 13 hindurch gelangen können. Gemäß Figur 6 ist ein solcher Schaumstoffkörper 15 in den Schmierstoffkanal 6, unmittelbar angrenzend an die Folie 11, eingesetzt.

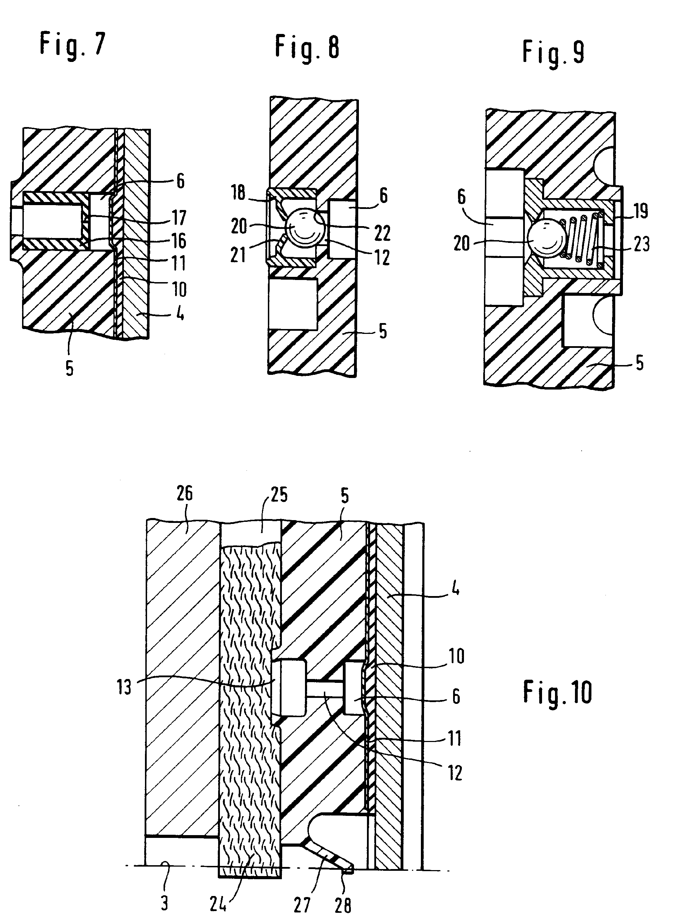

Figur 7 zeigt einen Abstreifer 5, in dessen Schmierstoffkanal 6 ein gummielastisches Ventil 16 eingesetzt ist. Dieses weist an seiner der Folie 11 zugewandten Seite einen Öffnungsschlitz 17 auf, der sich erst von einem bestimmten Schmierstoffdruck an öffnet. Dieses Ventil verhindert daher das Rückströmen von Schmierstoff aus der Lagereinheit in den Schmierstoffkanal 6. Zu diesem Zweck sind gemäß Figur 8 und Figur 9 Rückschlagventile 18 und 19 mit Ventilkugeln 20 vorgesehen, wobei der Ventilkörper des Rückschlagventils 18 Federelemente 21 aufweist, die die Ventilkugel 20 an eine als Ventilsitz wirkende Abdichtkante 22 des Abstreifers 5 andrücken. In Figur 9 wird die Ventilkugel 20 des Rückschlagventils 19 von einer Metallfeder 23 in der Verschlußstellung gehalten.

Die Abstreifereinheit nach Figur 10 weist an der von der Folie 11 abgewandten Stirnseite des Abstreifers 5 einen Dochtstreifen 24 auf, der in einer Ausnehmung 25 einer Stützplatte 26 angeordnet und von der Stützplatte 26 an dem Abstreifer 5 gehalten ist. Der Dochtstreifen 24 ragt bis zur Lauffläche 3 der Führungsschiene 2 vor und versorgt diese mit Schmierstoff aus dem Schmierstoffkanal. Bei dieser Ausführung ist an der Abstreiferlippe 27 eine ebenfalls auf die Lauffläche 3 ragende Nase 28 ausgebildet, die zusätzlich zu dem Dochtstreifen 24 bei der Bewegung des Lagerelementes 1 längs der Führungsschiene 2 eine Schmierstoffsammelfunktion ausübt.

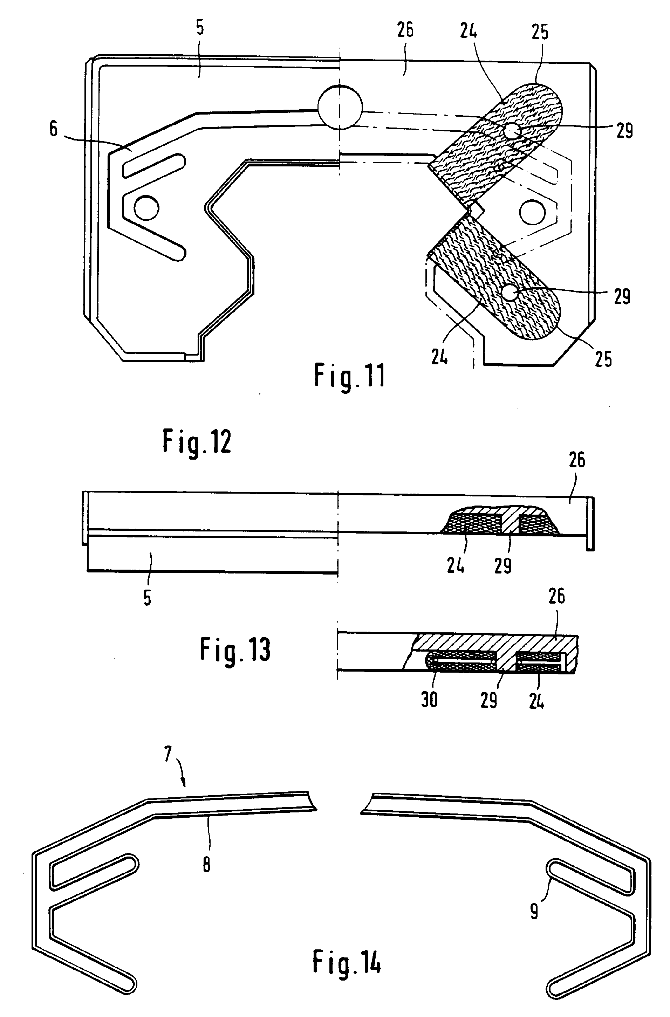

Gemäß den Figuren 11, 12 und 13 sind die Dochtstreifen 24 in den Ausnehmungen 25 der Stützplatte 26 an dieser zusätzlich durch herausragende Haltenocken 29 befestigt. In Figur 13 wird der Dochtstreifen 24 über ein Federelement 30 gegen die Lauffläche 3 der Führungsschiene 2 federelastisch angedrückt.

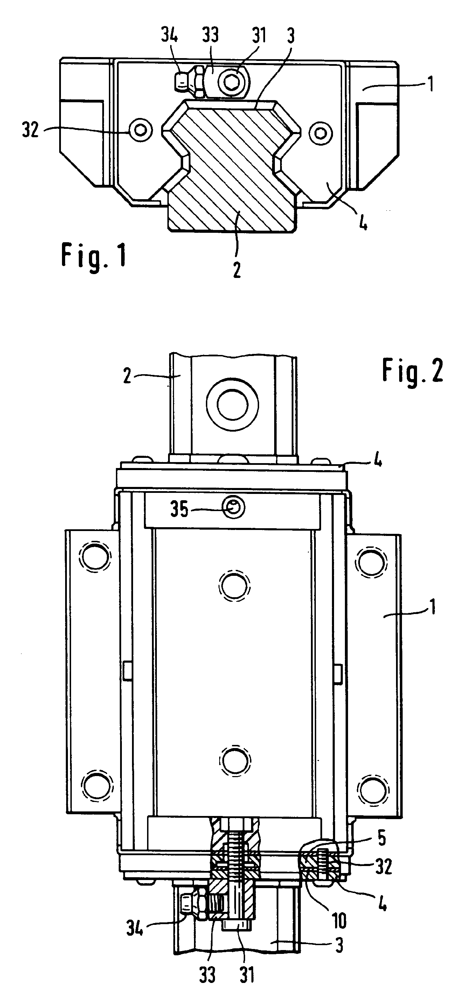

Gemäß den Figuren 1 und 2 weisen die Trägerplatten 4 und die Abstreifer 5 fluchtende Bohrungen auf, durch welche Schrauben 31 und 32 für die Montage hindurchgesteckt und in Gewindebohrungen des Lagerelements 1 eingeschraubt sind. Die Schraube 31 in Figur 2 ist länger ausgeführt, als die Schraube 32, damit mit ihr gleichzeitig ein Schmiernippelträger 33 für einen Schmiernippel 34 an dem Lagerelement 1 befestigt werden kann. Die Zufuhr von Schmierstoff kann über den Schmiernippel 34 oder über Bohrungen 35 des Lagerelements 1 erfolgen, die beispielsweise von dessen Oberseite ausgehen.

**Bezugszahlenliste**

| | | | |
|---|---|---|---|
| 1 | Lagerelement | 30 | Federelement |
| 2 | Führungsschiene | 31 | Schraube |
| 3 | Lauffläche | 32 | Schraube |
| 4 | Trägerplatte | 33 | Schmiernippelträger |
| 5 | Abstreifer | 34 | Schmiernippel |
| 6 | Schmierstoffkanal | 35 | Bohrung |
| 7 | Verschlußkappe | | |
| 8 | Kappenteil | | |
| 9 | Kappenteil | | |
| 10 | Dichtungsschicht | | |
| 11 | Folie | | |
| 12 | Verbindungskanal | | |
| 13 | Durchtrittsöffnung | | |
| 14 | Schaumstoffkörper | | |
| 15 | Schaumstoffkörper | | |
| 16 | gummielastisches Ventil | | |
| 17 | Öffnungsschlitz | | |
| 18 | Rückschlagventil | | |
| 19 | Rückschlagventil | | |
| 20 | Ventilkugel | | |
| 21 | Federelement | | |
| 22 | Abdichtkante | | |
| 23 | Metallfeder | | |
| 24 | Dochtstreifen | | |
| 25 | Ausnehmung | | |
| 26 | Stützplatte | | |
| 27 | Abstreiferlippe | | |
| 28 | Nase | | |
| 29 | Haltenocken | | |

**Patentansprüche**

1. Abstreifereinheit für die beiden Stirnseiten eines an der Lauffläche einer Führungsschiene (2) gelagerten Lagerelements (1), vorzugsweise Linearwälzlagerelements, die eine Trägerplatte (4) und einen Abstreifer (5) aufweist, der von der Trägerplatte gehalten ist, wobei der Abstreifer mit Schmierstoffkanälen (6) für die Versorgung der Lagereinheit mit Schmierstoff versehen ist und zum Zurückhalten von Schmierstoff in dem Lagerelement mit einem Endbereich auf der Lauffläche auflegbar ist, **dadurch gekennzeichnet,** daß die Schmierstoffkanäle (6) als von einer Stirnseite des Abstreifers (5) ausgehende Nuten ausgebildet sind, wobei zwischen der Trägerplatte (4) und dem Abstreifer (5) eine elastische Dichtungsschicht (10) mit einer die Schmierstoffkanäle (6) abdichtenden reißfesten Folie (11) angeordnet ist.

2. Abstreifereinheit nach Anspruch 1, **dadurch gekennzeichnet,** daß in dem Abstreifer (5) Verbindungskanäle (12) und Durchtrittsöffnungen (13) angeordnet sind, über welche die an der äußeren Stirnseite des Abstreifers (5) angeordneten Schmierstoffkanäle (6) mit dessen innerer, dem Lagerelement (1) zugewandter Stirnseite verbunden sind.

3. Abstreifereinheit nach Anspruch 2, **dadurch gekennzeichnet,** daß in die Durchtrittsöffnung (13) bzw. den Schmierstoffkanal (6) des Abstreifers (5) ein durchlässiger, sich über deren lichte Weite erstrekkender Schaumstoffkörper (14, 15) eingesetzt ist.

4. Abstreifereinheit nach Anspruch 2, **dadurch gekennzeichnet,** daß der Schmierstoffkanal (13) mittels eines eingesteckten, einen aufweitbaren Öffnungsschlitz (17) aufweisenden gummielastischen Ventils (16) verschlossen ist.

5. Abstreifereinheit nach Anspruch 2, **dadurch gekennzeichnet,** daß die Durchtrittsöffnung (13) mittels eines eingesteckten Rückschlagventils (18, 19) in einer der beiden Strömungsrichtungen verschlossen ist.

6. Abstreifereinheit nach einem der vorhergehenden Ansprüche, **dadurch gekennzeichnet,** daß an der inneren, dem Lagerelement (1) zugewandten Stirnseite des Abstreifers (5) anliegend ein Dochtstreifen (24) angeordnet ist, der sich mit einem Endbereich bis zu der Lauffläche (3) der Führungsschiene (2) erstreckt.

7. Abstreifereinheit nach Anspruch 6, **dadurch gekennzeichnet,** daß der Dochtstreifen (24) von einer Stützplatte (26) gehalten und in eine Ausnehmung (25) der Stützplatte (26) eingesetzt ist.

8. Abstreifereinheit nach Anspruch 7, **dadurch gekennzeichnet,** daß an der Stützplatte (26) abstehende Haltenocken (29) ausgebildet sind, die in entsprechende Öffnungen des Dochtstreifens (24) passend eingreifen.

9. Abstreifereinheit nach einem der vorhergehenden Ansprüche, **dadurch gekennzeichnet,** daß der Dochtstreifen (24) durch mindestens ein Federelement (30) gegen die Lauffläche (3) der Führungsschiene (2) gedrückt wird.

10. Abstreifereinheit für die beiden Stirnseiten eines an der Lauffläche einer Führungsschiene (2) gelagerten Lagerelements (1), vorzugsweise Linearwälzlagerelements, die eine Trägerplatte (4) und einen Abstreifer aufweist, der von der Trägerplatte gehalten ist, wobei der Abstreifer mit Schmierstoffkanälen (6) für die Versorgung der Lagereinheit mit Schmierstoff versehen ist und zum Zurückhalten von Schmierstoff in dem Lagerelement mit einem Endbereich auf der Lauffläche auflegbar ist, **dadurch gekennzeichnet,** daß die Schmierstoffkanäle (6) als von einer Stirnseite des Abstreifers (5) ausgehende Nuten ausgebildet sind, die mittels einer Verschlußkappe (7) verschlossen sind, wobei zwischen der Trägerplatte (4) und dem Abstreifer (5) eine elastische Dichtungsschicht (10) angeordnet ist.

## Claims

1. Wiper unit for the two front ends of a bearing element (1), preferably a linear rolling bearing element, mounted on the running face of a guide rail (2) and comprising a carrier plate (4) and a wiper (5) retained by the carrier plate, the wiper being provided with lubricant canals (6) for supplying lubricant to the bearing element, and an end region of the wiper being able to be made to bear against the running face to retain lubricant in the bearing element, characterized in that the lubricant canals (6) are configured as grooves starting from a front end of the wiper (5), there being arranged between the carrier plate (4) and the wiper (5), an elastic sealing layer (10) provided with a tear-resistant foil (11) which seals the lubricant canals (6).

2. Wiper unit according to claim 1, characterized in that the wiper (5) comprises connecting canals (12) and transfer openings (13) by which the lubricant canals (6) arranged on the outer front end of the wiper (5) are connected to the inner front end thereof facing the bearing element (1).

3. Wiper unit according to claim 2, characterized in that a body (14, 15) of permeable cellular material is inserted into the transfer opening (13) or the lubricant canal (6) of the wiper (5) and extends through a clear width thereof.

4. Wiper unit according to claim 2, characterized in that the lubricant canal (13) is closed by an inserted valve (16) made of a material with rubber-like elasticity and having a widenable opening slit (17).

5. Wiper unit according to claim 2, characterized in that the transfer opening (13) is closed in one of the two directions of flow by means of an inserted non-return valve (18, 19).

6. Wiper unit according to one of the preceding claims, characterized in that a wick strip (24) is arranged so as to bear against the inner front end of the wiper (5) facing the bearing element (1) and extends by an end region upto the running face (3) of the guide rail (2).

7. Wiper unit according to claim 6, characterized in that the wick strip (24) is retained by a retainer plate (26) and is inserted into a recess (25) of the retainer plate (26).

8. Wiper unit according to claim 7, characterized in that projecting retainer cogs (29) are formed on the retainer plate (26) and fit into corresponding openings in the wick strip (24).

9. Wiper unit according to one of the preceding claims, characterized in that the wick strip (24) is pressed against the running face (3) of the guide rail (2) by at least one spring element (30).

10. Wiper unit for the two front ends of a bearing element (1), preferably a linear rolling bearing element, mounted on the running face of a guide rail (2) and comprising a carrier plate (4) and a wiper retained by the carrier plate, the wiper being provided with lubricant canals (6) for supplying lubricant to the bearing element, and an end region of the wiper being able to be made to bear against the running face to retain lubricant in the bearing element, characterized in that the lubricant canals (6) are configured as grooves which start from a front end of the wiper (5) and are sealed by a sealing cap (7), there being arranged between the carrier plate (4) and the wiper (5), an elastic sealing layer (10).

**Revendications**

1. Dispositif de raclage pour les deux côtés frontaux d'un élément de palier (1), de préférence, un élément de palier linéaire à roulement, monté sur la face de glissement d'un rail de guidage (2) et muni d'une plaque de support (4) et d'un racleur (5) qui est retenu par la plaque de support et comprend des conduits de lubrifiant (6) pour l'alimentation du palier en lubrifiant, ledit racleur étant adapté à s'appuyer par une région terminale contre la face de glissement afin de retenir le lubrifiant dans l'élément de palier, caractérisé en ce que les conduits de lubrifiant (6) sont configurés sous la forme de rainures s'étendant à partir de l'un des côtés frontaux du racleur (5), il étant agencé entre la plaque de support (4) et le racleur (5), une couche élastique d'étanchéité (10) munie d'une feuille anti-déchirure (11) qui rend étanches les conduits de lubrifiant (6).

2. Dispositif de raclage selon la revendication 1, caractérisé en ce que, dans le racleur (5) sont agencés des conduits de liaison (12) et des ouvertures de transfert (13) par lesquels les conduits de lubrifiant (6) agencés sur le côté frontal extérieur du racleur (5) sont reliés au côté frontal intérieur de celui-ci qui fait face à l'élément de palier (1).

3. Dispositif de raclage selon la revendication 2, caractérisé en ce que, dans l'ouverture de transfert (13) ou dans le conduit de lubrifiant (6) du racleur (5) est inséré un corps perméable (14, 15) en matière mousse qui s'étend à travers la largeur libre du racleur (5).

4. Dispositif de raclage selon la revendication 2, caractérisé en ce que le conduit de lubrifiant (13) est fermé par une soupape (16) enfichable réalisé en une matière élastique du type caoutchaouc et comprenant un intervalle élargissable d'ouverture (17).

5. Dispositif de raclage selon la revendication 2, caractérisé en ce que l'ouverture de transfert (13) est fermée dans l'une des directions d'écoulement par un clapet anti-retour (18, 19) amovible.

6. Dispositif de raclage selon l'une des revendications précédentes, caractérisé en ce qu'il comprend une bande mèche (24) qui s'appuie contre le côté frontal intérieur du racleur (5) qui fait face à l'élément de palier (1) et dont une région terminale s'étend jusqu'à la face de glissement (3) du rail de guidage (2).

7. Dispositif de raclage selon la revendication 6, caractérisé en ce que la bande mèche (24) est retenue par une plaque d'appui (26) et est insérée dans un évidement (25) de cette plaque d'appui (26).

8. Dispositif de raclage selon la revendication 7, caractérisé en ce que, sur la plaque d'appui (26) sont prévus des talons de retenue (29) qui en font saillie et qui s'engagent de manière ajustée dans des ouvertures correspondantes de la bande mèche (24).

9. Dispositif de raclage selon l'une des revendications précédentes, caractérisé en ce que la bande mèche (24) est calée par au moins un élément-ressort (30) contre la face de glissement (3) du rail de guidage (2).

10. Dispositif de raclage pour les deux côtés frontaux d'un élément de palier (1), de préférence, un élément de palier linéaire à roulement, monté sur la face de glissement d'un rail de guidage (2) et muni d'une plaque de support (4) et d'un racleur (5) qui est retenu par la plaque de support et comprend des conduits de lubrifiant (6) pour l'alimentation du palier en lubrifiant, ledit racleur étant adapté à s'appuyer par une région terminale contre la face de glissement afin de retenir le lubrifiant dans l'élément de palier, caractérisé en ce que les conduits de lubrifiant (6) sont configurés sous la forme de rainures s'étendant à partir de l'un des côtés frontaux du racleur (5) et qui sont obturées par un couvercle d'obturation (7), il étant agencé entre la plaque de support (4) et le racleur (5), une couche élastique d'étanchéité (10).

Fig. 1

Fig. 2

Fig. 3

Fig. 4    Fig. 5    Fig. 6

10

# Fig. 7

# Fig. 8

# Fig. 9

# Fig.10

Fig.11

Fig.12

Fig.13

Fig.14